# EUROPÄISCHE PATENTANMELDUNG

(11) **EP 1 095 570 A1**
(43) Veröffentlichungstag der Anmeldung: **02.05.2001**
(21) Anmeldenummer: 00122655.4
(22) Anmeldetag: 18.10.2000
(51) Int. Cl.: A22C 11/12

(54) **Doppelklipvorrichtung und Verwendung derselben**

(30) Priorität: 29.10.1999 CH 197899
(71) Anmelder: Tipper Tie Alpina AG, 9201 Gossau (CH)
(72) Erfinder: Fässler, Markus, 9212 Arnegg (CH); Brunschwiler, Markus, 9200 Gossau (CH)
(74) Vertreter: Blum, Rudolf Emil Ernst

(57) **Zusammenfassung**

Die vorliegende Erfindung betrifft eine Doppelklipvorrichtung zum Verschliessen gefüllter Wurstdärme mit Klipsen (4a, 4b), bei welcher der Klipabstand (X) ohne Austausch von Bauteilen einstellbar ist. Hierdurch erhöht sich die Flexibilität der Doppelklipvorrichtung gegenüber sich ändernden Produktionssituationen, was zu einer Arbeitserleichterung und zu Kosteneinsparungen führt. Ein weiterer Vorteil liegt darin, dass durch eine Änderung des Klipabstands (X) Einfluss auf die Positionierung von in festen Abständen auf dem Wurstdarm aufgedruckten Labels (13) auf den fertigen Produkten genommen werden kann, wodurch unter Einbindung eines Sensors (12) mit einer Auswerte- und Steuerelektronik eine Doppelklipvorrichtung mit automatischer Labelzentrierung verwirklicht werden kann.

## Beschreibung

Die vorliegende Erfindung betrifft eine Doppelklipvorrichtung gemäss dem Oberbegriff von Anspruch 1 und eine Verwendung der Doppelklipvorrichtung.

Doppelklipvorrichtungen werden in Metzgereibetrieben zum Herstellen von Würsten aus befüllten Wurstdärmen verwendet. Hierzu wird die Wurstmasse an einer Stelle des befüllten Wurstdarms, die anschliessend zwischen zwei Würsten zu liegen kommt, gerafft und die so erhaltene Einschnürung anschliessend verdrängt. Sodann wird der eingeschnürte Bereich durch Anbringen zweier beabstandeter Metallklipse abgeklemmt und gegebenenfalls zwischen den Klipsen durchtrennt, wodurch die Enden der Würste entstehen. Je nach Wurstsorte, Wurstgrösse und verwendetem Wurstdarmmaterial kann der gewünschte Abstand zwischen den Klipsen unterschiedlich gross sein. Solche Vorrichtungen werden auch zum Verschliessen anderer schlauchförmiger Verpackungen verwendet.

Es sind Doppelklipvorrichtungen bekannt, bei denen der Klipabstand durch Umbauen der Vorrichtung an das jeweilige Produkt angepasst werden kann. Dieser Umbau ist jedoch zeitintensiv, was einen entsprechenden Produktionsausfall bedeutet, und erfordert zusätzliche Bauteile, weshalb oft ein einziger, für viele Produkte jedoch zu grosser Klipabstand verwendet wird, wodurch in der Folge unnötig viel Wurstdarmmaterial benötigt wird.

Es stellt sich daher die Aufgabe, eine Doppelklipvorrichtung zur Verfügung zu stellen, welche die genannten Nachteile nicht aufweist.

Diese Aufgabe wird von der Doppelklipvorrichtung gemäss Anspruch 1 gelöst.
Die Doppelklipvorrichtung ist derartig ausgebildet, dass der Abstand zwischen den Klipsen ohne den Austausch von Bauteilen einstellbar ist. Auf diese Weise kann der Klipabstand rasch und kostengünstig eingestellt bzw. auf das jeweils hergestellte Produkt (Wurstart und Wurstgrösse) angepasst werden und spezielle Betriebsverfahren werden möglich, die bei den bisherigen Vorrichtungen nicht ausführbar waren. Bevorzugterweise wird der Klipabstand durch eine Bewegung mindestens eines der Klipkanäle in Bezug auf den anderen Klipkanal eingestellt, z.B. durch eine Verschiebebewegung, wozu vorzugsweise eine steuerbare oder regelbare Betätigungsanordnung, z.B. eine pneumatische Betätigungsanordnung, vorgesehen ist.

Bevorzugterweise lässt sich der Klipabstand während des Betriebs einstellen. Hierdurch ergibt sich der Vorteil, dass dieser als Regelparameter für weitere Produktionsgrössen einsetzbar wird.

In einer bevorzugten Ausführung der Erfindung kann der Klipabstand stufenlos eingestellt werden, in einer anderen Ausführung kann er in Stufen eingestellt werden.

Vorzugsweise kann die Einstellung des Klipabstand manuell vorgenommen werden. Auch ist es von Vorteil, wenn dieser automatisch in Abhängigkeit von einem oder mehreren Produktionsparametern einstellbar ist. Hierdurch ergibt sich die Möglichkeit, den Klipabstand automatisch durch ein Produktionssteuerungssystem einzustellen zu lassen, was eine erhebliche Erleichterung bei flexibler Produktion mit einer Vielzahl von verschiedenen Produkten schafft.

Eine bevorzugte Ausführung umfasst Betätigungszylinder zur stufenweisen Einstellung des Klipabstands, bevorzugterweise Pneumatikzylinder.

Neben einer produktespezifischen Einstellung des Klipabstands kann es ausserdem gewünscht sein, diesen als variable Korrekturgrösse im laufenden Produktionsprozess, wie beispielsweise zur Labelzentrierung bei der Produktion von mit Kundenlabeln versehenen Verpackungen, insbesondere Würsten, einzusetzen. Die hierbei verwendeten Verpackungen bzw. Wurstdärme sind in festen Abständen mit Labels bedruckt, welche zumeist die Art der Wurst und/oder das Firmenlogo beinhalten. Die Abstände der Label zueinander entsprechen in der Regel der theoretischen Wurstlänge. Damit die Würste ein einheitliches Erscheinungsbild aufweisen und die vollständige Information dieser Labels auf jeder Wurst verfügbar ist, ist es gewünscht, dass das Label bei jeder Wurst in der gleichen Position zwischen den geklipsten Wurstenden angeordnet ist. Erfolgt das Klipsen mit fest eingestellten Maschinenparametern, so kommt es aufgrund von Toleranzen unweigerlich zu einem Wandern der Labelposition auf den geklipsten Würsten. Soll also eine bestimmte Position der Label auf dem Endprodukt sichergestellt werden, so muss diese oder die Position einer in festen Abständen zu den Labels angeordneten Hilfsmarkierung überwacht und gegebenenfalls korrigiert werden.

Eine bevorzugte Ausführung der Doppelklipvorrichtung umfasst daher mindestens einen Sensor zur Erfassung von auf dem Wurstdarm angebrachten Markierungen und eine Auswerte- und Steuerelektronik zur Steuerung des Klipabstands in Abhängigkeit von den Ausgangssignalen des Sensors.

Bevorzugterweise sind der Sensor und die Auswerte- und Steuerelektronik derartig ausgestaltet, dass sie eine Bestimmung der Position einer auf dem Wurstdarm angebrachten Markierung gegenüber einem maschinenfesten Punkt der Doppelklipvorrichtung, wie beispielsweise gegenüber den Klipkanälen oder den Klipwerkzeugen, ermöglichen. Hierdurch lässt sich die Position der Markierung gegenüber den Klipsen bei der fertig geklipsten Wurst vorausberechnen und gegebenenfalls durch eine gezielte Veränderung des Klipabstands korrigieren.

In einer weiteren Ausführung sind der Sensor und die Auswerte- und Steuerelektronik derartig ausgebildet, dass sie im statischen Zustand, d.h. in einem Zustand ohne Relativbewegung zwischen Doppelklipvorrichtung und Wurstdarm, welcher zum Verdrängen, Raffen und Klipsen allgemein üblich ist, die Bestimmung der Position einer auf dem Wurstdarm angebrachten Markierung gegenüber einem maschinenfesten Punkt der Doppelklipvorrichtung ermöglichen. Dieses kann durch alle denkbaren Kombinationen von Sensoren und Markierungen erfolgen, die geeignet sind, ihre relative Position zueinander im statischen Zustand zu bestimmen, wie z.B. einfache geometrische Markierungen in Kombination mit eindimensionalen Linienscannern oder zweidimensionalen Bildmustersensoren oder aber Markierungen, welche eine über ihre Erstreckung sich ändernde Positionscodierung, z.B. in Form von Farb- und/oder Helligkeitsabstufungen aufweisen, in Kombination mit einem oder mehreren auf diese Codierungen sensiblen Sensoren, wie z.B. Farbhelligkeitssensoren.

Auch ist es bevorzugt, das die Doppelklipvorrichtung ausgestaltet ist zur Bestimmung der Position einer auf dem Wurstdarm angebrachten Markierung gegenüber einem maschinenfesten Punkt der Doppelklipvorrichtung im verdrängten Bereich zwischen zwei geklipsten Würsten. Dieses ist speziell dann von Vorteil, wenn die zur Positionsbestimmung verwendeten Markierungen Hilfsmarkierungen sind, welche nicht auf dem fertigen Produkt angeordnet sein sollen.

Zudem ist es wünschenswert, wenn die Doppelklipvorrichtung derart ausgebildet ist, dass sie ein externes Signal zur Auslösung des Klipvorganges verwenden kann. Hierdurch ergibt sich die Möglichkeit, den Zyklus der Doppelklipvorrichtung mit demjenigen einer anderen Maschine, z.B. einer vorgeschalteten Wurstfüllmaschine, zu synchronisieren.

Besonders vorteilhaft ist es, wenn die Doppelklipvorrichtung zur Herstellung von Würsten mit zwischen den geklipsten Enden zentrierten Beschriftungen und/oder Labels aus einem vorbedruckten Wurstdarm verwendet wird.

Weitere bevorzugte Ausführungen der Erfindung ergeben sich aus den abhängigen Ansprüchen sowie aus der nun folgenden Beschreibung anhand der Figuren. Dabei zeigen:
Fig. 1 eine teilweise geschnittene Darstellung der wesentlichen Elemente der Doppelklipvorrichtung;
Fig. 2 eine Seitenansicht einer Vorrichtung zur Einstellung des Klipkanalabstands der Doppelklipvorrichtung;
Fig. 3 eine Draufsicht auf die Vorrichtung von Fig. 2 bei minimalem Klipkanalabstand;
Fig. 4 eine Draufsicht auf die Vorrichtung von Fig. 2 bei maximalem Klipkanalabstand;
Fig. 5 eine teilweise geschnittene Darstellung der wesentlichen Elemente der Doppelklipvorrichtung mit Labelzentrierung.

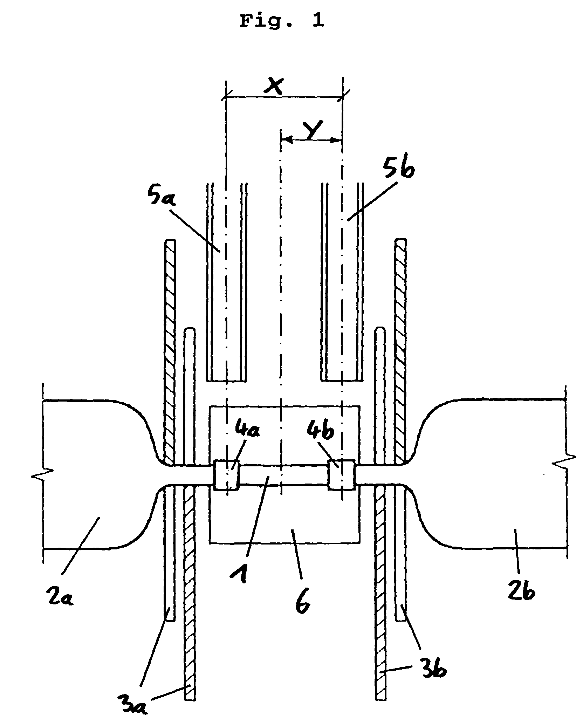

Das Grundprinzip einer bevorzugten Ausführung der Erfindung ist in Fig. 1 dargestellt. Diese Darstellung zeigt neben den wesentlichen Elementen der Doppelklipvorrichtung den eingeschnürten Bereich 1 zwischen zwei Würsten 2a, 2b der durch Raffen und Verdrängen mittels der Scherenpackete 3a und 3b gebildet wurde und durch Setzen von Klipsen 4a, 4b mit einem Klipabstand von X gegenüber den nichtverdrängten Bereichen abgeklemmt wurde, wodurch die Enden der beiden Würste 2a, 2b entstanden sind. Solche Vorrichtungen und das eigentliche Setzen der Klips, z.B. mittels Stempel und Matrize, die auf den, allenfalls vorgeformten, Klipdraht einwirken um den Klip zu bilden, sind bekannt und werden daher vorliegend nicht weiter erläutert. Wie der Darstellung weiter zu entnehmen ist, ergibt sich der Klipabstand X aus dem Mittenabstand der Klipkanäle 5a und 5b zueinander zum Zeitpunkt des Klipsens. Dieser Abstand wird nach Stand der Technik durch den Austausch der entsprechenden Klipkanäle und/oder zugehöriger Bauteile gewählt. Gemäss der Erfindung werden die Klipkanäle 5a, 5b nun durch eine Bewegung zueinander verstellt, so dass kein Austausch von Teilen zur Verstellung notwendig ist, wobei der Klipkanalabstand X durch ein Verfahren des der Wurstfüllmaschine nächstgelegenen Klipkanals 5b um das Einstellmass Y in Längsrichtung des eingeschnürten Bereichs 1 eingestellt werden kann. Die Position des Klipkanals 5a und damit auch die des Klips 4a ist fix, jedoch sind ebenso Ausführungen denkbar, bei denen die Position beider Klipkanäle 5a, 5b und damit auch beider Klipse 4a, 4b verändert werden kann. In dieser Ausführung wird für beide Klipkanäle ein gemeinsamer Stempel (nicht dargestellt) und eine gemeinsame Matrize 6 für alle Klipabstände verwendet, es ist jedoch ebenso möglich, für jeden Klipkanal einen Stempel und eine Matrize zu verwenden und diese nach Bedarf zusammen mit dem entsprechenden Klipkanal zu Verfahren.

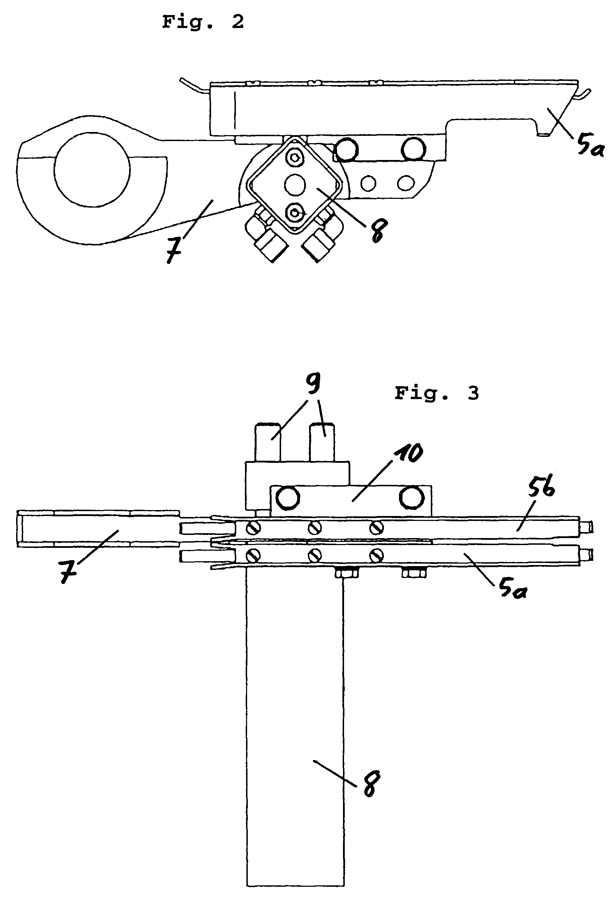

In Fig. 2 ist eine Seitenansicht einer Vorrichtung zur Einstellung des Klipkanalabstands der Doppelklipvorrichtung dargestellt. Wie zu ersehen ist, ist der feststehende Klipkanal 5a direkt an einem Tragarm 7 befestigt, welcher ausserdem eine Anordnung von pneumatischen Betätigungszylindern 8 für die Einstellung des Klipabstands durch Verschiebung von Klipkanal 5b trägt.

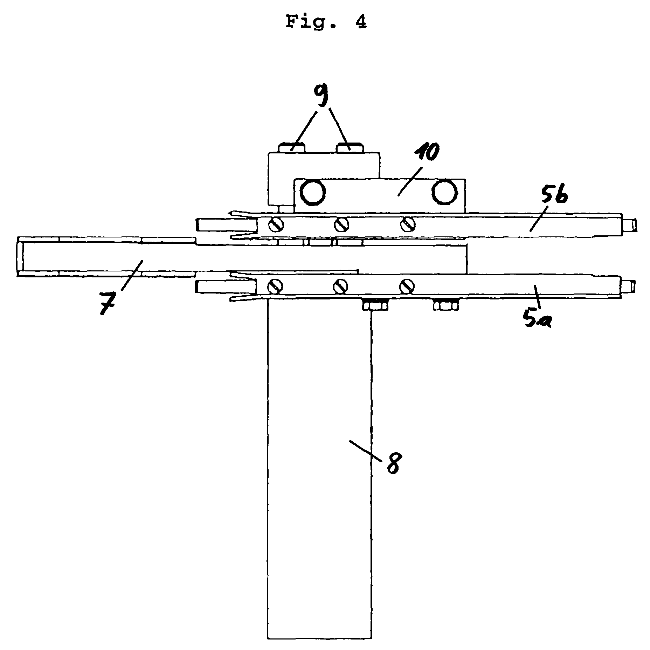

Fig. 3 zeigt eine Draufsicht auf die Vorrichtung von Fig. 2 bei minimalem Abstand zwischen den Klipkanälen 5a und 5b. Wie aus dieser Darstellung ersichtlich ist, ist der verfahrbare Klipkanal 5b auf einem auf Führungsstangen 9 verfahrbaren Schlitten 10 befestigt und befindet sich bei minimalem Klipabstand über dem Tragarm 7. Die Führungsstangen 9 sind am Tragarm 7 befestigt. Soll der Abstand zwischen den Klipkanälen 5a und 5b verändert werden, so wird eine Kolbenstange (nicht dargestellt), welche durch den Tragarm 7 hindurchtritt und mit dem Schlitten 10 verbunden ist, von der Anordnung von pneumatischen Betätigungszylindern 8 betätigt und der Schlitten 10 mit dem auf diesem befestigten Klipkanal 5b hierdurch auf den Führungsstangen 9 um einen entsprechenden Betrag gegenüber dem auf dem feststehenden Tragarm 7 befestigten Klipkanal 5a verschoben. Eine Draufsicht auf diese Vorrichtung bei maximalem Klipkanalabstand ist in Fig. 4 dargestellt. Die bevorzugte Serienschaltung von Pneumatikzylindern mit vorzugsweise unterschiedlichem Hub ermöglicht durch selektive Ansteuerung der Zylinder in beide Hubrichtungen ein feingestuftes Bewegen des verstellbaren Klipkanals 5b auf kostengünstige Weise. Natürlich können beliebige Antriebe mit Stufen oder stufenlose Antriebe für die Bewegung des Klipkanals oder der Klipkanäle eingesetzt werden.

Die Verstellung kann einerseits produktebezogen erfolgen. Verpackungen bzw. Würste mit grossem Kaliber benötigen in der Regel einen längeren Wurstzipfel als solche mit kleinem Kaliber, um ein Abrutschen des Klips sicher zu vermeiden. Auch die Art der Weiterbehandlung der Wurst (Trocknen, Räuchern, Brühen, usw.) beeinflusst die optimale Zipfellänge. Da die Umrüstung des Klipabstands nach dem Stand der Technik aufwendig ist, wird jedoch mit den herkömmlichen Doppelklipmaschinen oft produkteunabhängig nur mit maximalem Klipabstand produziert, was einen unnötig hohen Darmverbrauch ergibt. Bei der Klipvorrichtung gemäss der vorliegenden Erfindung kann nun auf einfache Weise der Klipabstand an die erforderliche Zipfellänge angepasst werden. Vorzugsweise wird der Klipabstand in die produktebezogenen, speicherbaren Parameter der Klipmaschine oder der Kombination Klipmaschine/Füller einbezogen, so dass zu jedem Produkt, für welches Parameter gespeichert werden, auch der Klipabstand gespeichert wird und von der Maschinensteuerung beim Aufruf dieses Produktes eingestellt werden kann. Eine weitere bevorzugte Verwendung liegt in der Zentrierung eines auf der Verpackungshülle aufgedruckten Labels, was nachfolgend erläutert wird.

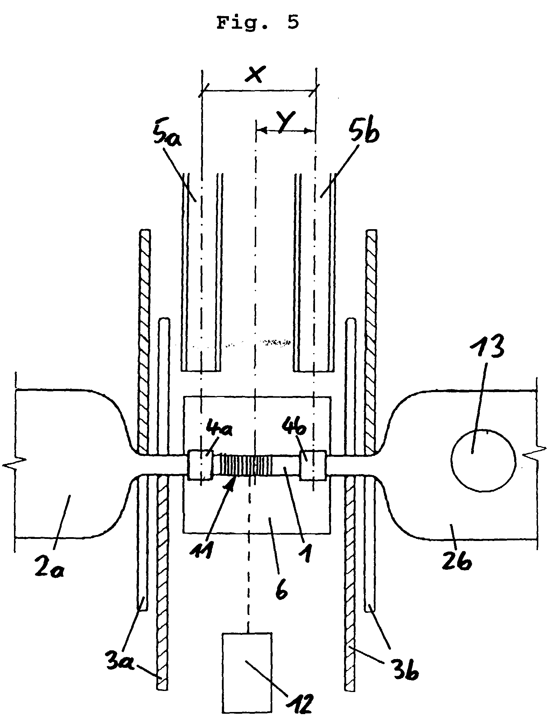

In Fig. 5 ist das Grundprinzip einer bevorzugten Ausführung der Doppelklipvorrichtung mit Labelzentrierung dargestellt. Die Darstellung gleicht der Darstellung in Fig. 1, weist jedoch zusätzlich eine Markierung 11 des Darmes im eingeschnürten Bereich 1 zwischen den Klipsen 4a und 4b sowie einen fix auf der Vorrichtung angebrachten Sensor 12 auf. In der dargestellten Situation sind die Klipse bereits gesetzt und es findet für kurze Zeit, abhängig vom Maschinentakt, keine Relativbewegung zwischen den befüllten Wurstdärmen und der Doppelklipvorrichtung bzw. zwischen dem dargestellten eingeschnürten Bereich und dem dargestellten Ausschnitt der Doppelklipvorrichtung statt. Die Markierung 11 ist z. B. auf dem Wurstdarm aufgedruckt und besteht aus einem sich in Längsrichtung erstreckenden Farbbalken mit fliessendem Übergang von Schwarz nach Weiss. Der Sensor 12 ist ein optischer Sensor, der in der Lage ist, im vorliegenden statischen Zustand aus der jeweiligen Mischfarbe des ihm gegenüberliegenden Bereichs der Markierung 11 seine genaue Position gegenüber der Markierung 11 zu ermitteln. Da die Markierung 11 einen durch die Darmbedruckung gegebenen, bekannten Abstand zu einem nachfolgenden, ebenfalls auf den Wurstdarm aufgedruckten Label 13 aufweist, ist somit auch der Abstand zwischen Sensor 12 und Label 13 bekannt. Da wiederum die Positionen der Klipkanäle 5a und 5b gegenüber dem Sensor 12 bekannt sind, ist auch die Position des Labels 13 gegenüber dem Klipkanal 5b und gegenüber dem Klip 4b bekannt. Entspricht nun die ermittelte Position der Markierung 11 gegenüber dem Sensor 12 nicht einem gewünschten Abstand zwischen Label 13 und Klip 4b, so kann eine Korrektur des Klipabstands X durch Verfahren des Klipkanals 5b vorgenommen werden. Wie schon vorgängig erwähnt wurde, erfolgt im hier dargestellten Fall das Ermitteln der Position der Markierung 11 und damit auch das indirekte Ermitteln der Position des Labels erst nach dem Klipsen, so dass etwaige vorgenommene Korrekturen des Klipabstands X erst im darauf folgenden Klipvorgang zur Positionskorrektur des Labels 13 führen. Es ist jedoch ebenso denkbar, die Positionsbestimmung nach dem Raffen und Verdrängen und vor dem Klipsen durchzuführen, wodurch eine jeweils aktuelle Überprüfung und gegebenenfalls Einstellung des Klipabstands X bei jedem Klipvorgang möglich wäre. In der in Fig. 5 dargestellten Situation liegt ein maximaler Klipabstand X vor, welcher einen Regeleingriff nur noch in Richtung eines kleineren Klipabstands X zulässt. Es ist jedoch vorgesehen, dass die Korrektur des Klipabstands X um einen mittleren Klipabstand herum erfolgen soll, um einen wirkungsvollen Regeleingriff in beide Richtungen zu gewährleisten. Auch wenn die Ermittlung der Labelposition im oben beschriebenen Beispiel im statischen Zustand, d.h. ohne Relativbewegung zwischen dem befüllten Wurstdarm und der Doppelklipvorrichtung, und im Bereich der Einschnürung zwischen zwei Würsten erfolgt, sind ebenso Ausführungsvarianten vorgesehen, bei denen eine Positionsbestimmung mit Hilfe von einem oder mehreren Sensoren ausserhalb des eingeschnürten Bereichs stattfindet, und zwar sowohl im statischen als auch im bewegten Zustand. Im statischen Fall kann beispielsweise die zuvor beschriebene Markierung 11 in einem Bereich auf der Wurst 2a, 2b angebracht werden, wodurch diese allerdings auf dem späteren Endprodukt sichtbar wäre. Um diese störende Wirkung zu vermeiden, wäre es in diesem Fall auch denkbar, Markierungen zu verwenden, die ohne Verwendung zusätzlicher Hilfsmittel für das menschliche Auge unsichtbar sind, für einen entsprechenden Sensor jedoch lesbar sind, wie z.B. fluoreszierende Markierungen. Soll das Label selbst als Markierung verwendet werden, so kann die Position desselben im statischen oder dynamischen Zustand mit einer Linienkamera oder einer Punktmatrixkamera mit entsprechender Auswertesoftware ermittelt werden. Auch kann im dynamischen Fall mit einem Sensor der Zeitpunkt im Klipzyklus der Doppelklipvorrichtung ermittelt werden, zu welchem das sich auf dem befüllten Darm befindliche Label eine bestimmte Position in der Doppelklipvorrichtung passiert. Auf diese Weise lässt sich feststellen, ob das Label vorauseilt oder hinterher hinkt. Eine entsprechende Korrektur über den Klipabstand kann sodann eingeleitet werden. Als Referenzsignal für den Klipzyklus wird bevorzugterweise das von einer vorgeschalteten Füllmaschine gegebene Signal zur Auslösung des Klipvorganges verwendet werden, so dass der zeitliche Unterschied zwischen dem Sensorsignal und dem Klipsignal von der Füllmaschine die Kenngrösse für die Labelposition bildet und eine Abweichung derselben von einem Sollwert eine Korrektur des Klipabstands auslösen kann. Die Verwendung der erfindungsgemässen Doppeklipvorrichtung zum labelzentrierten Klipsen mit Klipsignal von der Füllmaschine und Anpassung des Klipabstands ergibt auf einfache Weise korrekt prall gefüllte Würste mit korrektem Gewicht und korrekt zentriertem Label. Dies im Gegensatz zu bekannten Lösungen, bei denen der Klipbefehl von der Markierung bzw. dem Label selbst ausgelöst wird (DE 36 08 983 und DE 195 19 394).

## Patentansprüche

1. Doppelklipvorrichtung zum Verschliessen gefüllter schlauchförmiger Verpackungshüllen, insbesondere zum Verschliessen gefüllter Wurstdärme, mit Klipsen (4a, 4b), dadurch gekennzeichnet, dass der Klipabstand (X) ohne Austausch von Bauteilen einstellbar ist, insbesondere durch eine Bewegung, insbesondere durch eine Verschiebung, von mindestens einem der Klipkanäle (5a, 5b) gegenüber dem anderen Klipkanal durch eine Bewegungsanordnung.

2. Doppelklipvorrichtung nach Anspruch 1, dadurch gekennzeichnet, dass der Klipabstand (X) während des Betriebs einstellbar ist.

3. Doppelklipvorrichtung nach einem der vorhergehenden Ansprüche, dadurch gekennzeichnet, dass der Klipabstand (X) stufenlos einstellbar ist.

4. Doppelklipvorrichtung nach einem der Ansprüche 1 bis 2, dadurch gekennzeichnet, dass der Klipabstand (X) in Stufen einstellbar ist.

5. Doppelklipvorrichtung nach einem der vorangehenden Ansprüche, dadurch gekennzeichnet, dass der Klipabstand (X) manuell einstellbar ist.

6. Doppelklipvorrichtung nach einem der vorangehenden Ansprüche, dadurch gekennzeichnet, dass der Klipabstand (X) automatisch in Abhängigkeit von einem oder mehreren Produktionsparametern einstellbar ist.

7. Doppelklipvorrichtung nach einem der vorangehenden Ansprüche, dadurch gekennzeichnet, dass die Bewegungsanordnung eine Anordnung von Betätigungszylindern (8) aufweist zur stufenweisen Einstellung des Klipabstands (X), und insbesondere, dass die Betätigungszylinder (8) Pneumatikzylinder sind.

8. Doppelklipvorrichtung nach einem der vorangehenden Ansprüche des weiteren umfassend mindestens einen Sensor (12) zur Erfassung von Markierungen (11) auf dem Wurstdarm und eine Auswerte- und Steuerelektronik zur Steuerung des Klipabstands (X) in Abhängigkeit von den Ausgangssignalen des Sensors (12).

9. Doppelklipvorrichtung nach Anspruch 8, dadurch gekennzeichnet, dass der Sensor (12) und die Auswerte- und Steuerelektronik ausgestaltet sind zur Bestimmung der Position einer auf dem Wurstdarm angebrachten Markierung (11) gegenüber einem in Längsrichtung maschinenfesten Punkt der Doppelklipvorrichtung.

10. Doppelklipvorrichtung nach Anspruch 9, dadurch gekennzeichnet, dass der Sensor (12) und die Auswerte- und Steuerelektronik ausgestaltet sind zur Bestimmung der Position der Markierung (11) im statischen Zustand.

11. Doppelklipvorrichtung nach einem der Ansprüche 8 bis 10, dadurch gekennzeichnet, dass der Sensor (12) und die Auswerte- und Steuerelektronik ausgestaltet sind zur Bestimmung der Position einer sich in Längsrichtung des Wurstdarms erstreckenden Markierung (11) mit sich in Längsrichtung ändernder Positionscodierung.

12. Doppelklipvorrichtung nach einem der Ansprüche 8 bis 11, dadurch gekennzeichnet, dass der Sensor (12) ein optischer Sensor ist und insbesondere dadurch gekennzeichnet, dass der Sensor (12) verschiedene Farben und/oder Farbhelligkeiten unterscheiden kann.

13. Doppelklipvorrichtung nach einem der Ansprüche 8 bis 12, dadurch gekennzeichnet, dass Sensor (12) und die Auswerte- und Steuerelektronik ausgestaltet sind zur Bestimmung der Position einer Markierung (11) im verdrängten Bereich zwischen zwei geklipsten oder noch zu klipsenden Würsten (2a, 2b).

14. Doppelklipvorrichtung nach einem der vorangehenden Ansprüche, dadurch gekennzeichnet, dass diese ausgestaltet ist zur Auslösung des Klipvorganges aufgrund eines von einer externen Vorrichtung erhaltenen Signals, insbesondere aufgrund eines von einer vorgeschalteten Wurstfüllmaschine erhaltenen Klipsignals.

15. Verwendung der Doppelklipvorrichtung nach einem der Ansprüche 1 bis 14 zur Herstellung von Würsten (2a, 2b) mit einer konstanten Positionierung von auf dem Wurstdarm angebrachten Beschriftungen und/oder Labels (13) zwischen den geklipsten Enden der Würste (2a, 2b), insbesondere zur Herstellung von Würsten (2a, 2b) mit mittig zwischen den geklipsten Enden zentrierten Beschriftungen und/oder Labels (13).
